# EUROPEAN PATENT SPECIFICATION

(11) **EP 3 309 050 B1**
(45) Date of publication and mention of the grant of the patent: **16.09.2020**
(21) Application number: 17195709.5
(22) Date of filing: 10.10.2017
(51) Int. Cl.: B62K 3/02, B62K 15/00

(54) **BICYCLE**
FAHRRAD
BICYCLETTE

(30) Priority: 12.10.2016 FI 20165774
(43) Date of publication of application: 18.04.2018
(73) Proprietor: Laxström, Zakarias, 65610 Mustasaari (FI)
(72) Inventor: Laxström, Zakarias, 65610 Mustasaari (FI)
(74) Representative: Kolster Oy Ab

(56) References cited:
- EP-A1- 0 323 964
- EP-A2- 2 409 906
- WO-A1-2012/037798
- CN-U- 2 093 806
- CN-U- 204 527 468
- GB-A- 2 021 055
- US-A- 5 069 468

## Description

### Technical field

The present invention relates to a bicycle according to the preamble of claim 1. A bicycle of this type is arranged to be foldable so as to easily transform into a portable package and, at the same time, to facilitate the storage of the bicycle thanks to its smaller space requirement.

### Prior art

US 5 069 468 A discloses the following features of claim 1; A folding bicycle comprising: a frame having a seat tube, an down tube, and a top tube which form a rigid triangle structure, wherein the top tube and down tube are connected to a head tube, while the seat tube and down tube are connected to a crankshaft bearing housing, and the top tube and seat tube are joined below a seat of the bicycle, and the bicycle further has front and back wheels connected with the frame via a front fork and rear fork, an inclined strut extending from the top tube to the down tube, which inclined strut is pivoted to the top tube, while the connection to the down tube is arranged to be opened, and the down tube comprises two parts that are detachably attached to each other, and the top tube has at one end a pivoted connection to the seat tube so that a first rotation axis of a first joint is substantially perpendicular to a longitudinal axis of the seat tube, and the first rotation axis of the first joint between the top tube and seat tube is on a plane substantially parallel to the seat tube and shows a turn (γ) on this plane, which is 2 to 9 degrees to the normal of the cross-sectional plane of the bicycle, and the top tube, at its other end that is opposite the seat tube, is connected in a pivoted manner with the head tube so that a second rotation axis of a second joint is substantially perpendicular to the longitudinal axes of both the head tube and top tube.

It is known per se to provide foldable bicycles. Often these bicycles are, however, equipped with small wheels that make the use of the bicycle uncomfortable. A bicycle of this type is disclosed in patent publication US 4 433 852, for instance. Such bicycles usually comprise a foldable frame that makes it possible to fold the front and back wheels of the bicycle against each other. This structure is made possible due to the open structure of the frame with only two frame posts. For the folding of a bicycle with wheels larger than its diameter and a closed-type frame, often referred to as a diamond frame, the structural solutions become immediately more difficult due to the three frame posts that form a rigid structure. Known solutions that endeavour to find a working concept include patent publication US 5 069 468, for example. However, the presented solution causes problems in view of the rigidity of the closed frame, the durability of the joints used in the frame, and the reliability of the locking mechanism.

### Presentation of the problem

With the present invention, the problems of known solutions can be essentially avoided. The object of the invention is, thus, to provide an easy-to-handle and durable foldable bicycle. The cyclist should be able to quickly and simply fold the bicycle into a compact package that is easy to carry and store. The bicycle should be transportable in public transportation as well as storable in today's small apartments. The bicycle should also be easy and quick to open into operational mode without having to use specific tools for this. This object is achieved in accordance with the invention by providing the bicycle of the invention the characterizing features of claim 1. The subsequent dependent claims present appropriate further developments and variations of the invention which further improve its operation.

The invention is based on the idea that the front and back wheels of the bicycle can be set side by side with a few simple movements. The wheels should, in spite of their new location, be able to freely rotate so as to simplify the transportation of the bicycle.

In the following description, the terms "up", "down" and the like refer to directions in relation to the bicycle or its structural details as shown in the attached figures.

With the device described in the present invention, a plurality of significant advantages are achieved over the prior art. One of these is the fact that the front and back wheels of the bicycle can be maneuvered into a substantially parallel position. The fact that the wheels are parallel or close to parallel improves both the appearance of the folded bicycle and its function. For instance, it is considerably easier to transport the folded bicycle.

The operation of the present invention is based mainly on the structure that permits the turning of the top tube of the bicycle in relation to the seat tube. This turning also determines the distance between the front and back wheels that have been brought together.

By adding another turning essentially perpendicular to the section plane of the earlier turning of the same joint, a change is achieved in the direction of the wheels in relation to each other. However, this takes place without essentially changing the distance between the wheels.

By means of the first turning of the joint between the top tube and seat tube, the wheels can be maneuvered to be at a correct distance from each other, while an adjustment by the later turning can fine-tune the parallel direction between the wheels.

The present invention makes it possible to construct a foldable bicycle that is simple to use but, at the same time, has a sufficiently rigid frame structure.

Further advantages and details of the invention become apparent from the description below.

### Brief description of the figures

In the following, the invention will be described in greater detail with reference to the drawing, in which
Figure 1 shows an axonometric representation of a foldable bicycle according to the present invention,
Figure 2 shows a bicycle according to Figure 1 in folded state from the side,
Figure 3 shows a bicycle according to Figure 2 in folded state from below,
Figure 4 shows an axonometric representation of the frame of a foldable bicycle according to the present invention,
Figure 5 shows a frame according Figure 4 from the front,
Figure 6 shows a frame according Figure 4 from above,
Figure 7 shows a frame joint at the head tube from the side,
Figure 8 shows the frame joint at the seat tube from the side,
Figure 9 shows the frame joint at a crankshaft bearing housing from the side,
Figure 10 shows the frame joint at the seat tube from above,
Figure 11 shows the frame joint at the seat tube in the folded state of the bicycle from the front,
Figure 12 shows the frame joint at the head tube from the back,
Figure 13 shows the frame joint at the crankshaft bearing housing from the front,
Figure 14 shows a bicycle in operational mode from the front, and
Figure 15 shows a bicycle in folded state from the front.

### Preferred embodiment

The above figures do not show the bicycle in scale but are only intended to illustrate structural solutions of the preferred embodiments and the operation of the embodiments. Herein, the structural parts shown in the figures and denoted with reference numerals correspond to the structural solutions that are presented in the description below and are at the same time indicated by their reference numbers.

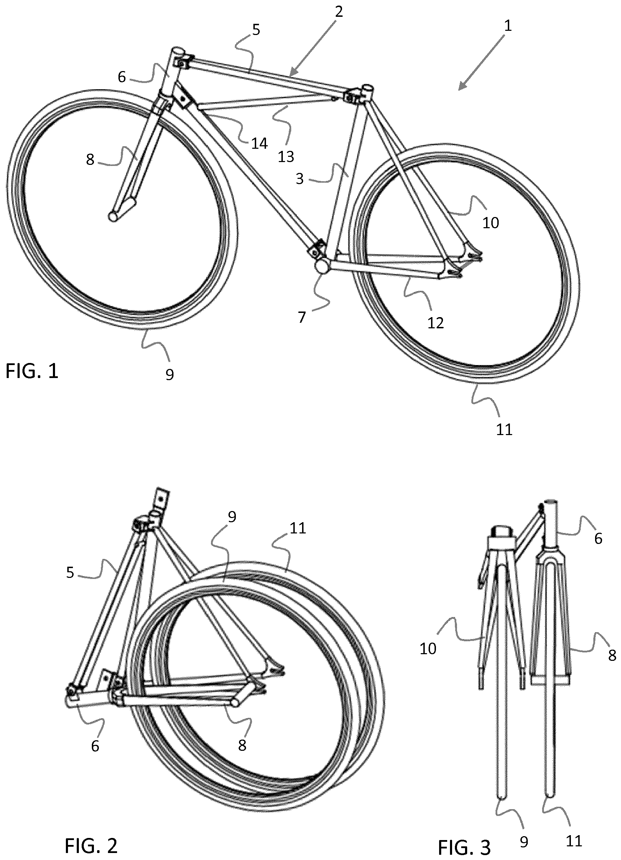

As shown in Figure 1, the bicycle 1 comprises the usual main components. The bicycle frame 2 is of the closed type, also referred to as diamond frame. It is made up of three frame tubes, in other words, a seat tube 3, a down tube 4 and a top tube 5 that form a rigid triangle structure. The top tube and down tube converge in a head tube 6, while the seat tube and down tube converge in a crankshaft bearing housing 7. The top tube and seat tube join below the seat of the bicycle (not shown). From the head tube, a front fork 8 extends downward to be joined to a front wheel 9. From the opposite end of the head tube, a steering tube extends upward, to which handlebars are joined with a steering stem (not shown).

In the rear half of the bicycle, there is a back fork 10, usually joined to the seat tube 3. The back fork is attached to a back wheel 11 and two chain stays 12 that extend out of the crankshaft bearing housing 7. The seat tube partly surrounds a seat tube, to which the seat of the bicycle is arranged (not shown), while the crankshaft bearing housing has two pedal cranks with as many pedals (not shown).

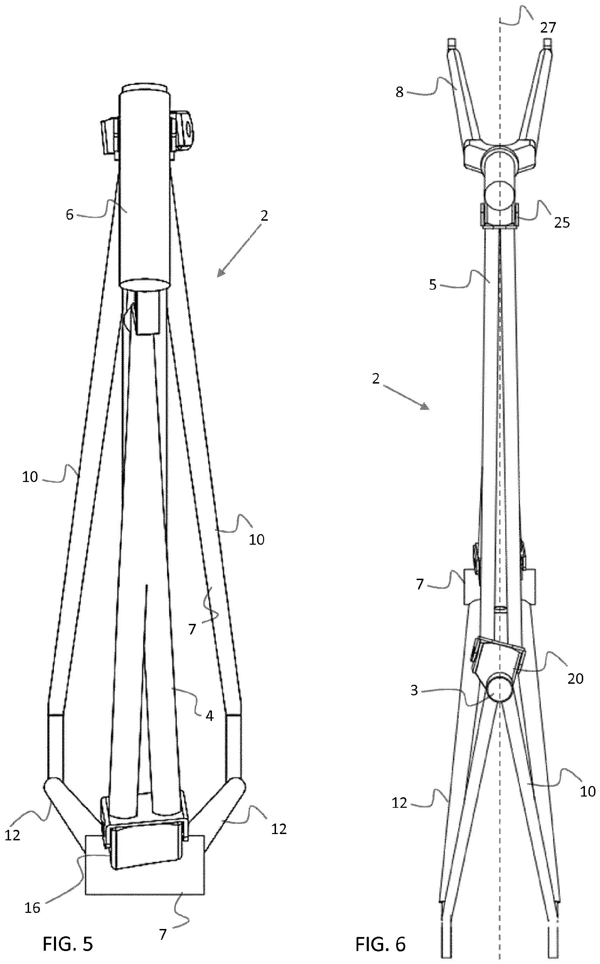

In the present figures, the bicycle parts are shown as substantially round structural parts, but may also be oval or polygonal. The structural parts can be made as simple, double parallel parts or as a combination of these depending on the manufacturing material and required rigidity. The structural parts can be made of metal, various fiber materials or even wood. They may be hollow or compact depending on the material and cross-sectional form. For example, Figure 5, which is a front view of the bicycle 1, and Figure 6, which is a top view of the bicycle, show that the top tube 5 is made of two substantially parallel parts. The down tube 4 is, in turn, made as a Y tube that widens close to the crankshaft bearing housing 7.

To stabilize the frame 2 of the present foldable bicycle 1, it also has an inclined strut 13 that extends from the top tube 5 to the down tube 4. The inclined strut is arranged in a pivoted manner to the top tube while the connection 14 to the down tube is arranged to be opened, i.e. the inclined strut can be detached from the down tube with a few simple movements.

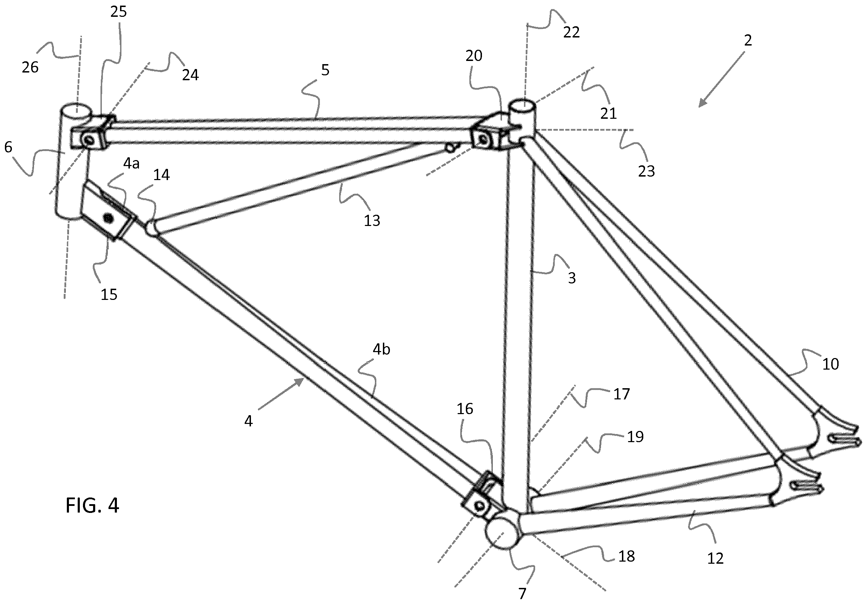

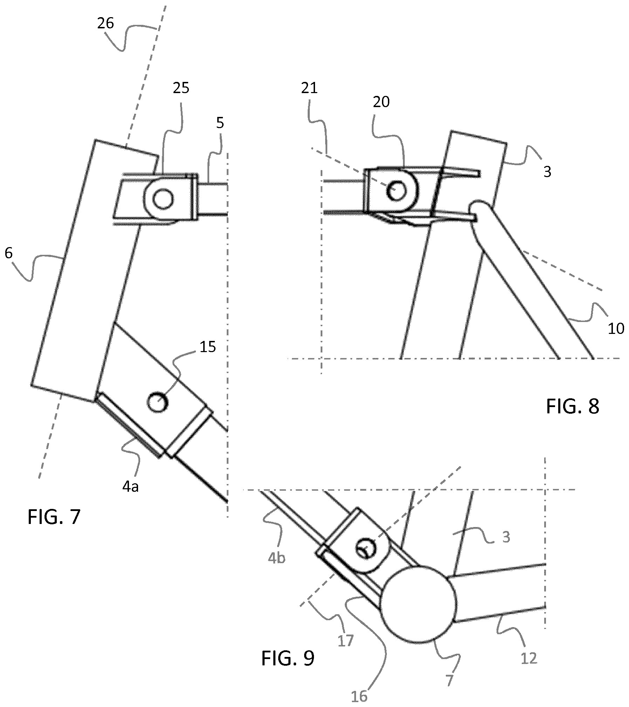

The folding of a bicycle 1 according to the present embodiment is possible through some specific structural solutions shown in Figure 4. Firstly, the down tube 4 comprises two parts 4a and 4b that are detachably attached to each other (see Figure 2). The front part 4a of the two-part down tube is rigidly joined with the head tube 6, while the rear part 4b of the down tube is joined in a pivoted manner to the crankshaft bearing housing 7. The front and rear parts are joined with a mechanical connection 15, for instance a screw joint shown in Figure 7.

The above-mentioned inclined strut 13 extends from the top tube 5 to the two-part down tube 4 in such a manner that the connection 14 to the down tube is arranged to be between the crankshaft bearing housing 7 and connection 15 that connects the front 4a and rear 4b parts of the down tube. In a specific embodiment, it is even possible that the inclined strut extends from the top tube to the two-part down tube in such a manner that the connection to the down tube is arranged to be in the connection 15 that connects the front and rear parts of the down tube.

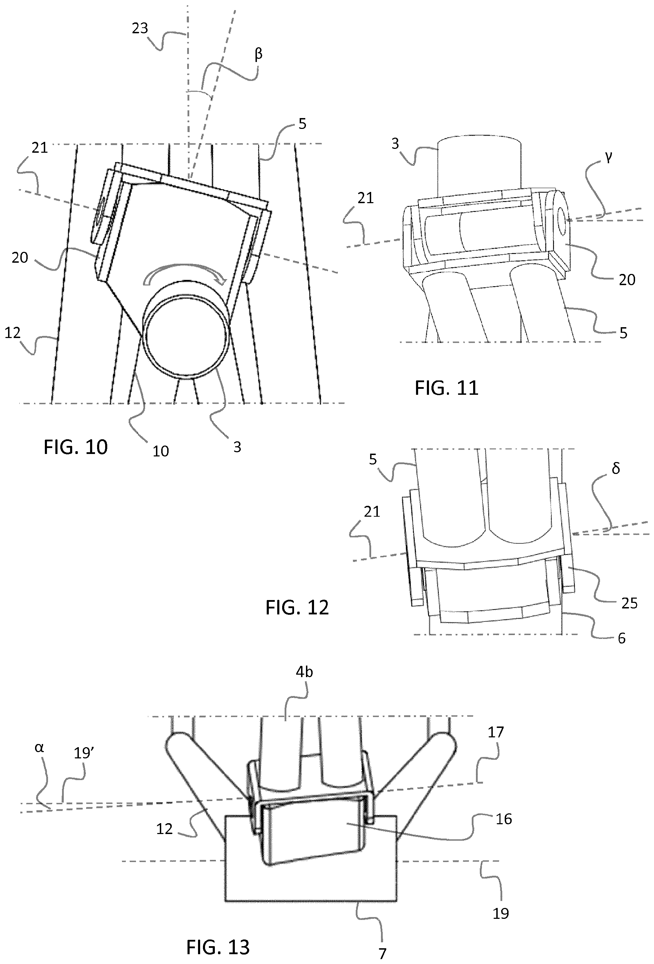

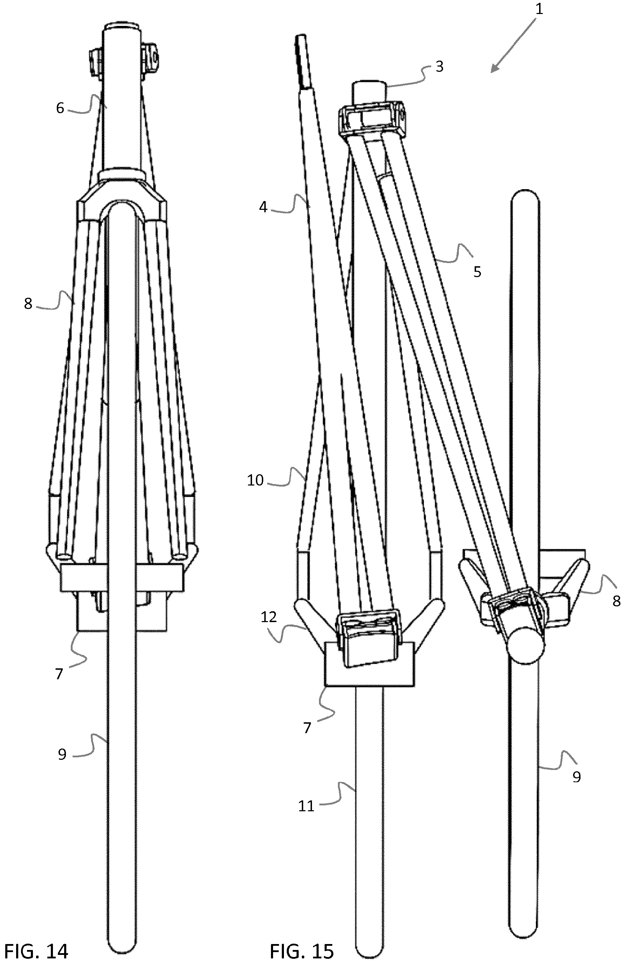

Secondly, the rear part 4b of the down tube has a pivoted connection 16, in which a rotation axle 17 is on a plane perpendicular to the longitudinal axis 18 of the rear part of the down tube, see Figure 4. The structure is also shown in detail in Figures 9 and 13. The rotation axle 17 of the pivoted connection 16 is at the same time turned in the above-mentioned plane in such a manner that it is at an angle α against a line that is parallel to the longitudinal axis 19 of the crankshaft bearing housing 7, wherein the parallel line is marked by 19', see Figure 13. This angle is in the size range of 2 to 11 degrees, preferably 6 to 7 degrees. The turning preferably occurs counter-clockwise around the longitudinal axis 18 as seen along the longitudinal axis toward the crankshaft bearing housing. The angling of the rotation axle 17 of the joint 16 that connects the rear part 4b of the down tube to the crankshaft bearing housing 7 causes the part of the down tube to be moved in relation to the seat tube 3, when the down tube is folded during the folding of the bicycle 1. This is shown in Figure 15, for instance.

Thirdly, the top tube 5 has at one end thereof a pivoted connection 20, where it connects with the seat tube 3, see Figure 4. The structure is also shown in detail in Figures 8, 10, and 11. The rotation axle 21 in this pivoted connection is substantially perpendicular to the longitudinal axis of the seat tube 22. At the same time, the rotation axle is turned around this longitudinal axis in such a manner that it is at an angle β that is in the size range of 7 to 23 degrees, preferably 13 to 17 degrees, in relation to the longitudinal axis 23 of the top tube, see Figure 10. The turning preferably takes place clockwise around the seat tube as seen in a direction toward the crankshaft bearing housing. The essential thing herein is that the rotation axle 21 of the top tube is turned around the seat tube 3 in a direction opposite to the turning of the rotation axle 17 of the rear part 4b of the down tube around the longitudinal axis 18 of the rear part 4b of the down tube, as seen in a direction toward the crankshaft bearing housing 7. The angling of the rotation axle of the top tube means that the even the top tube will be moved in relation to the seat tube 3, when the top tube 5 is folded down during the folding of the bicycle 1. Due to the different directions of each rotation axle 17 and 21, the top tube and the rear part of the down tube will take a final position on the opposite sides of the seat tube when the bicycle is folded.

Fourthly, the top tube 5 has at its second end that is opposite the seat tube 3 a pivoted connection to the head tube 6, see Figure 4. The structure is also shown in detail in Figure 7. The rotation axle 21 in this pivoted connection 25 is arranged to be substantially perpendicular to both the longitudinal axis of the head tube 26 and the longitudinal axis 23 of the top tube. Thanks to this joint, it is possible to fold the head tube-mounted front fork 8 and the front wheel 9 in it against the back wheel 11. With this last folding, the outer dimensions of the folded package can be minimized.

So as to further ensure that the path of movement of the front wheel 9 does not, during the folding of the bicycle 1, coincide with any other structural parts of the bicycle, the rotation axle 21 in the joint 20 between the top tube 5 and seat tube 3 is on a plane that is substantially parallel to the seat tube. The rotation axle can now be given a turn γ on this plane, which is in the size range of 2 to 9 degrees, preferably 5 to 6 degrees to the normal of the cross-sectional plane 27 of the bicycle, when it has followed the joint between the top tube and seat tube during its turning around the longitudinal axis of the seat tube, see Figures 10 and 11. The rotation takes place counter-clockwise, when the joint is seen along the top tube toward the seat tube. The same result can also be achieved by allowing the rotation axle 24 in the joint 25 between the top tube 5 and head tube 6 instead to be on a plane that is substantially parallel to the head tube. After this, the rotation axle 24 is allowed to turn on this plane to a corresponding angle δ, which is in the size range of 2 to 9 degrees, preferably 5 to 6 degrees, to the normal of the cross-sectional plane 27 of the bicycle, see Figure 12. The rotation takes place counter-clockwise, when the joint is seen along the top tube toward the head tube. A bicycle according to the present embodiment can be folded in a manner that is best shown in Figures 1 to 3 and 14 and 15.

First, the connection 14 between the inclined strut 13 and down tube 4 is opened and the inclined strut is folded against the top tube 5. Then, the connection 15 that joins both parts of the down tube is opened. The freed rear part 4b of the down tube can now be rotated clockwise in relation to the rotation axle 17 into a position beside the seat tube 3. The front half of the bicycle is now free to be rotated around the rotation axle 21 against the rear half of the bicycle.

The top tube 5 is rotated counter-clockwise around the rotation axle 21 of the top tube toward the seat tube 3, where it takes a position beside the seat tube which is opposite that of the inclined strut 13. At the same time, the front wheel 9 swings in a direction toward the back wheel 11. To finally set the front wheel against the back wheel, the head tube 6 is rotated counter-clockwise around the rotation axle 24. When the wheels are beside each other, their axles can preferably be locked to each other to, thus, stabilize the folded bicycle. By fastening the wheel axles to each other, it also becomes possible for the wheels to continue to roll freely on a base, which facilitates the transport of the folded bicycle.

## Claims

1. A folding bicycle (1) comprising: a frame (2) having a seat tube (3), an down tube (4), and a top tube (5) which form a rigid triangle structure, wherein the top tube (5) and down tube (4) are connected to a head tube (6), while the seat tube (3) and down tube (4) are connected to a crankshaft bearing housing (7), and the top tube and seat tube are joined below a seat of the bicycle, and the bicycle (1) further has front and back wheels (9, 11) connected with the frame via a front fork (8) and rear fork (10), an inclined strut (13) extending from the top tube (5) to the down tube (4), which inclined strut is pivoted to the top tube, while the connection (14) to the down tube is arranged to be opened, and the down tube (4) comprises two parts (4a, 4bl) that are detachably attached to each other, and the top tube (5) has at one end a pivoted connection to the seat tube (3) so that a first rotation axis (21) of a first joint (20) is substantially perpendicular to a longitudinal axis (22) of the seat tube, while the first rotation axis (21) is turned around the longitudinal axis (22) of the seat tube to an angle (β) in relation to a longitudinal axis (23) of the top tube, and the first rotation axis (21) of the first joint (20) between the top tube (5) and seat tube (3) is on a plane substantially parallel to the seat tube (5) and shows a turn (γ) on this plane, which is 2 to 9 degrees to the normal of the cross-sectional plane (27) of the bicycle (1), and the top tube (5), at its other end that is opposite the seat tube (3), is connected in a pivoted manner with the head tube (6) so that a second rotation axis (24) of a second joint (25) is substantially perpendicular to the longitudinal axes (26, 23) of both the head tube (6) and top tube (5).

2. A bicycle (1) as claimed in claim 1, wherein the first rotation axis (21) shows a turn (γ) counter-clockwise to the normal of the cross-sectional plane (27) of the bicycle when the first rotation axis (21) of the first joint (20) shows an angle (β) clockwise around the seat tube (3) viewed in the direction of the crankshaft bearing housing.

3. A bicycle (1) as claimed in claim 1, wherein the first rotation axis (21) shows a turn (γ) clockwise to the normal of the cross-sectional plane (27) of the bicycle when the first rotation axis (21) of the first joint (20) shows an angle (β) counter-clockwise around the seat tube (3) viewed in the direction of the crankshaft bearing housing.

4. A bicycle (1) as claimed in claim 1, wherein the down tube (4) is connected in a pivoted manner to the crankshaft bearing housing (7) so that a third rotation axis (17) of a third joint (16) is on a plane that is perpendicular to a longitudinal axis (18) in the down tube (4) and the third rotation axis (17) is simultaneously turned on said plane into an angle (α) in relation to a line (19') that is substantially parallel to the longitudinal axis (19) of the crankshaft bearing housing.

5. A bicycle (1) as claimed in claim 1, wherein the down tube (4) comprises a front part (4a) that is joined rigidly to the head tube (6), and a rear part (4b) that has a pivoted connection with the crankshaft bearing housing (7).

6. A bicycle (1) as claimed in claim 5, wherein the front and rear parts (4a, 4b) of the down tube (4) are joined with a mechanic connection (15),

7. A bicycle (1) as claimed in claim 6, wherein the mechanical connection (15) is a screw connection.

8. A bicycle (1) as claimed in claim 5, wherein the rotation axis (17) in the joint (16) between the down tube (4) and crankshaft bearing housing (7) is at an angle (α) to a line (19') that is parallel to the longitudinal axis (19) of the crankshaft bearing housing, which is 2 to 11 degrees.

9. A bicycle (1) as claimed in claim 8, wherein the angle (α) is preferably 6 to 7 degrees.

10. A bicycle (1) as claimed in claim 5, wherein the first rotation axis (21) of the first joint (20) between the top tube (5) and seat tube (3) is at an angle (β) to the longitudinal axis (23) of the top tube (5), which is 7 to 23 degrees.

11. A bicycle (1) as claimed in claim 10, wherein the angle (β) is preferably 13 to 17 degrees.

12. A bicycle (1) as claimed in claim 10, wherein the first rotation axis (21) of the top tube (3) is turned toward the seat tube (3) in a direction opposite to the turning of the third rotation axis (17) of the rear part (4b) of the down tube (4) around the longitudinal axis (18) of the rear part (4b) of the down tube (4), as seen in a direction toward the crankshaft bearing housing (7).

13. A bicycle (1) as claimed in claim 1, wherein the angle (γ) is preferably 5 to 6 degrees.

14. A bicycle (1) as claimed in claim 12, wherein the second rotation axis (24) of the second joint (25) between the top tube (5) and head tube (6) is on a plane substantially parallel to the head tube (6) and shows a turn (γ) on this plane, which is 2 to 9 degrees counter-clockwise to the normal of the cross-sectional plane of the bicycle.

15. A bicycle as claimed in claim 14, wherein the angle (γ) is preferably 5 to 6 degrees.

16. A bicycle (1) as claimed in claim 6, wherein the inclined strut (13) extends from the top tube (5) to the two-part down tube (4) in such a manner that the connection (14) to the down tube is arranged to be between the crankshaft bearing housing (7) and a first connection (15) that joins the front and rear parts (4a, 4b) of the down tube (4).

17. A bicycle (1) as claimed in claim 16, wherein the inclined strut (13) extends from the top tube (5) to the two-part down tube (4) in such a manner that a second connection (14) to the down tube is arranged to coincide with the first connection (15) that joins the front and rear parts (4a, 4b) of the down tube.

## Patentansprüche

1. Klappfahrrad (1), das Folgendes umfasst: einen Rahmen (2) mit einem Sitzrohr (3), einem Unterrohr (4) und einem Oberrohr (5), die eine starre Dreiecksstruktur bilden, wobei das Oberrohr (5) und das Unterrohr (4) mit einem Steuerrohr (6) verbunden sind, während das Sitzrohr (3) und das Unterrohr (4) mit einem Kurbellagergehäuse (7) verbunden sind und das Oberrohr und das Sitzrohr unter einem Sitz des Fahrrads gekoppelt sind und das Fahrrad (1) ferner ein Vorder- und ein Hinterrad (9, 11), die via eine vordere Gabel (8) und eine hintere Gabel (10) mit dem Rahmen verbunden sind, eine geneigte Strebe (13), die sich vom Oberrohr (5) zum Unterrohr (4) erstreckt, aufweist, wobei die geneigte Strebe schwenkbar am Oberrohr gelagert ist, während die Verbindung (14) zum Unterrohr angeordnet ist, geöffnet zu werden, und das Unterrohr (4) zwei Teile (4a, 4b1) umfasst, die lösbar aneinander befestigt sind, und das Oberrohr (5) an einem Ende eine schwenkbar Verbindung zum Sitzrohr (3) aufweist, derart, dass eine erste Drehachse (21) eines ersten Gelenks (20) im Wesentlichen senkrecht zu einer Längsachse (22) des Sitzrohrs verläuft, während die erste Drehachse (21) in einen Winkel (β) mit Bezug auf eine Längsachse (23) des Oberrohrs um die Längsachse (22) des Sitzrohrs gedreht wird, und die erste Drehachse (21) des ersten Gelenks (20) zwischen dem Oberrohr (5) und dem Sitzrohr (3) in einer Ebene im Wesentlichen parallel zum Sitzrohr (5) liegt und eine Wendung (γ) in dieser Ebene zeigt, die 2 bis 9 Grad zur Normalen der Querschnittsebene (27) des Fahrrads (1) beträgt, und das Oberrohr (5) an seinem anderen Ende, das dem Sitzrohr (3) gegenüberliegt, schwenkbar mit dem Steuerrohr (6) verbunden ist, derart, dass eine zweite Drehachse (24) eines zweiten Gelenks (25) im Wesentlichen senkrecht zur Längsachse (26, 23) sowohl des Steuerrohrs (6) als auch des Oberrohrs (5) verläuft.

2. Fahrrad (1) nach Anspruch 1, wobei die erste Drehachse (21) eine Wendung (γ) gegen den Uhrzeigersinn zur Normalen der Querschnittsebene (27) des Fahrrads zeigt, wenn, in Richtung des Kurbellagergehäuses gesehen, die erste Drehachse (21) des ersten Gelenks (20) einen Winkel (β) im Uhrzeigersinn um das Sitzrohr (3) zeigt.

3. Fahrrad (1) nach Anspruch 1, wobei die erste Drehachse (21) eine Wendung (γ) im Uhrzeigersinn zur Normalen der Querschnittsebene (27) des Fahrrads zeigt, wenn, in Richtung des Kurbellagergehäuses gesehen, die erste Drehachse (21) des ersten Gelenks (20) einen Winkel (β) gegen den Uhrzeigersinn um das Sitzrohr (3) zeigt.

4. Fahrrad (1) nach Anspruch 1, wobei das Unterrohr (4) schwenkbar mit dem Kurbellagergehäuse (7) verbunden ist, derart, dass eine dritte Drehachse (17) eines dritten Gelenks (16) in einer Ebene liegt, die senkrecht zu einer Längsachse (18) im Unterrohr (4) verläuft, und die dritte Drehachse (17) gleichzeitig in der Ebene in einen Winkel (α) mit Bezug auf eine Linie (19'), die im Wesentlichen parallel zur Längsachse (19) des Kurbellagergehäuses liegt, gedreht wird.

5. Fahrrad (1) nach Anspruch 1, wobei das Unterrohr (4) einen vorderen Teil (4a), der starr mit dem Steuerrohr (6) verbunden ist, und einen hinteren Teil (4b), der eine schwenkbare Verbindung mit dem Kurbellagergehäuse (7) aufweist, umfasst.

6. Fahrrad (1) nach Anspruch 5, wobei der vordere und der hintere Teil (4a, 4b) des Unterrohrs (4) mit einer mechanischen Verbindung (15) gekoppelt sind.

7. Fahrrad (1) nach Anspruch 6, wobei die mechanische Verbindung (15) eine Schraubverbindung ist.

8. Fahrrad (1) nach Anspruch 5, wobei die Drehachse (17) im Gelenk (16) zwischen dem Unterrohr (4) und dem Kurbellagergehäuse (7) einen Winkel (α) zu einer Linie (19'), die parallel zur Längsachse (19) des Kurbellagergehäuses verläuft, aufweist, der 2 bis 11 Grad beträgt.

9. Fahrrad (1) nach Anspruch 8, wobei der Winkel (α) vorzugsweise 6 bis 7 Grad beträgt.

10. Fahrrad (1) nach Anspruch 5, wobei die erste Drehachse (21) des ersten Gelenks (20) zwischen dem Oberrohr (5) und dem Sitzrohr (3) einen Winkel (β) zur Längsachse (23) des Oberrohrs (5) aufweist, der 7 bis 23 Grad beträgt.

11. Fahrrad (1) nach Anspruch 10, wobei der Winkel (β) vorzugsweise 13 bis 17 Grad beträgt.

12. Fahrrad (1) nach Anspruch 10, wobei, in eine Richtung zum Kurbellagergehäuse (7) gesehen, die erste Drehachse (21) des Oberrohrs (3) in eine Richtung gedreht wird, die dem Drehen der dritten Drehachse (17) des hinteren Teils (4b) des Unterrohrs (4) um die Längsachse (18) des hinteren Teils (4b) des Unterrohrs (4) zum Sitzrohr (3) entgegengesetzt ist.

13. Fahrrad (1) nach Anspruch 1, wobei der Winkel (γ) vorzugsweise 5 bis 6 Grad beträgt.

14. Fahrrad (1) nach Anspruch 12, wobei die zweite Drehachse (24) des zweiten Gelenks (25) zwischen dem Oberrohr (5) und dem Steuerrohr (6) in einer Ebene liegt, die im Wesentlichen parallel zum Steuerrohr (6) verläuft, und eine Wendung (γ) in dieser Ebene zeigt, die 2 bis 9 Grad gegen den Uhrzeigersinn zur Normalen der Querschnittsebene des Fahrrads beträgt.

15. Fahrrad nach Anspruch 14, wobei der Winkel (γ) vorzugsweise 5 bis 6 Grad beträgt.

16. Fahrrad (1) nach Anspruch 6, wobei sich die geneigte Strebe (13) derart vom Oberrohr (5) zum zweiteiligen Unterrohr (4) erstreckt, dass die Verbindung (14) zum Unterrohr angeordnet ist, zwischen dem Kurbellagergehäuse (7) und einer ersten Verbindung (15), die den vorderen und den hinteren Teil (4a, 4b) des Unterrohrs (4) koppelt, zu liegen.

17. Fahrrad (1) nach Anspruch 16, wobei sich die geneigte Strebe (13) derart vom Oberrohr (5) zum zweiteiligen Unterrohr (4) erstreckt, dass eine zweite Verbindung (14) zum Unterrohr angeordnet ist, mit der ersten Verbindung (15), die den vorderen und den hinteren Teil (4a, 4b) des Unterrohrs koppelt, zusammenzufallen.

## Revendications

1. Bicyclette pliante (1) comprenant : un cadre (2) ayant un tube de selle (3), un tube diagonal (4) et un tube horizontal (5) qui forment une structure triangulaire rigide, dans laquelle le tube horizontal (5) et le tube diagonal (4) sont raccordés à un tube de direction (6), alors que le tube de selle (3) et le tube diagonal (4) sont raccordés à un logement de palier de vilebrequin (7), et le tube horizontal et le tube de selle sont assemblés au-dessous d'une selle de la bicyclette, et la bicyclette (1) a en outre des roues avant et arrière (9, 11) raccordées avec le cadre via une fourche avant (8) et une fourche arrière (10), un montant incliné (13) s'étendant du tube horizontal (5) au tube diagonal (4), lequel montant incliné est pivoté par rapport au tube horizontal, alors que le raccordement (14) au tube diagonal est agencé pour être ouvert, et le tube diagonal (4) comprend deux parties (4a, 4b1) qui sont fixées de manière détachable entre elles, et le tube horizontal (5) a, au niveau d'une extrémité, un raccordement pivoté par rapport au tube de selle (3) de sorte qu'un premier axe de rotation (21) d'une première articulation (20) est sensiblement perpendiculaire à un axe longitudinal (22) du tube de selle, alors que le premier axe de rotation (21) tourne autour de l'axe longitudinal (22) du tube de selle à un angle (β) par rapport à un axe longitudinal (23) du tube horizontal, et le premier axe de rotation (21) de la première articulation (20) entre le tube horizontal (5) et le tube de selle (3) est sur un plan sensiblement parallèle au tube de selle (5) et présente une rotation (γ) sur ce plan, qui est de 2 à 9 degrés par rapport à la normale du plan transversal (27) de la bicyclette (1), et le tube horizontal (5), au niveau de son autre extrémité qui est opposée au tube de selle (3), est raccordé d'une manière pivotée avec le tube de direction (6) de sorte qu'un deuxième axe de rotation (24) d'une deuxième articulation (25) est sensiblement perpendiculaire aux axes longitudinaux (26, 23) à la fois du tube de direction (6) et du tube horizontal (5).

2. Bicyclette (1) selon la revendication 1, dans laquelle le premier axe de rotation (21) présente une rotation (γ) dans le sens inverse des aiguilles d'une montre par rapport à la normale du plan transversal (27) de la bicyclette lorsque le premier axe de rotation (21) de la première articulation (20) représente un angle (β) dans le sens des aiguilles d'une montre autour du tube de selle (3) observé dans la direction du logement de palier de vilebrequin.

3. Bicyclette (1) selon la revendication 1, dans laquelle le premier axe de rotation (21) présente une rotation (γ) dans le sens des aiguilles d'une montre par rapport à la normale du plan transversal (27) de la bicyclette lorsque le premier axe de rotation (21) de la première articulation (20) présente un angle (β) dans le sens inverse des aiguilles d'une montre autour du tube de selle (3) observé dans la direction du logement de palier de vilebrequin.

4. Bicyclette (1) selon la revendication 1, dans lequel le tube diagonal (4) est raccordé d'une manière pivotée au logement de palier de vilebrequin (7) de sorte qu'un troisième axe de rotation (17) d'une troisième articulation (16) est sur un plan qui est perpendiculaire à un axe longitudinal (18) dans le tube diagonal (4) et le troisième axe de rotation (17) tourne simultanément sur ledit plan à un angle (α) par rapport à une ligne (19') qui est sensiblement parallèle à l'axe longitudinal (19) du logement de palier de vilebrequin.

5. Bicyclette (1) selon la revendication 1, dans laquelle le tube diagonal (4) comprend une partie avant (4a) qui est rigidement assemblée au tube de direction (6) et une partie arrière (4b) qui a un raccordement pivoté avec le logement de palier de vilebrequin (7).

6. Bicyclette (1) selon la revendication 5, dans laquelle les parties avant et arrière (4a, 4b) du tube diagonal (4) sont assemblées avec un raccordement mécanique (15) .

7. Bicyclette (1) selon la revendication 6, dans laquelle le raccordement mécanique (15) est un raccordement à vis.

8. Bicyclette (1) selon la revendication 5, dans laquelle l'axe de rotation (17) dans l'articulation (16) entre le tube diagonal (4) et le logement de palier de vilebrequin (7) est à un angle (α) par rapport à une ligne (19') qui est parallèle à l'axe longitudinal (19) du logement de palier de vilebrequin, qui est de 2 à 11 degrés.

9. Bicyclette (1) selon la revendication 8, dans laquelle l'angle (α) est de préférence de 6 à 7 degrés.

10. Bicyclette (1) selon la revendication 5, dans laquelle le premier axe de rotation (21) de la première articulation (20) entre le tube horizontal (5) et le tube de selle (3) est à un angle (β) par rapport à l'axe longitudinal (23) du tube horizontal (5) qui est de 7 à 23 degrés.

11. Bicyclette (1) selon la revendication 10, dans laquelle l'angle (β) est de préférence de 13 à 17 degrés.

12. Bicyclette (1) selon la revendication 10, dans laquelle le premier axe de rotation (21) du tube horizontal (3) est tourné vers le tube de selle (3) dans une direction opposée à la rotation du troisième axe de rotation (17) de la partie arrière (4b) du tube diagonal (4) autour de l'axe longitudinal (18) de la partie arrière (4b) du tube diagonal (4), comme observé dans une direction vers le logement de palier de vilebrequin (7).

13. Bicyclette (1) selon la revendication 1, dans laquelle l'angle (γ) est de préférence de 5 à 6 degrés.

14. Bicyclette (1) selon la revendication 12, dans laquelle le deuxième axe de rotation (24) de la deuxième articulation (25) entre le tube horizontal (5) et le tube de direction (6) est sur un plan sensiblement parallèle au tube de direction (6) et présente une rotation (γ) sur ce plan, qui est de 2 à 9 degrés dans le sens inverse des aiguilles d'une montre par rapport à la normale du plan transversal de la bicyclette.

15. Bicyclette (1) selon la revendication 14, dans laquelle l'angle (γ) est de préférence de 5 à 6 degrés.

16. Bicyclette (1) selon la revendication 6, dans laquelle le montant incliné (13) s'étend à partir du tube horizontal (5) jusqu'au tube diagonal en deux parties (4) de sorte que le raccordement (14) au tube diagonal est agencé pour être entre le logement de palier de vilebrequin (7) et un premier raccordement (15) qui assemble les parties avant et arrière (4a, 4b) du tube diagonal (4).

17. Bicyclette (1) selon la revendication 16, dans laquelle le montant incliné (13) s'étend à partir du tube horizontal (5) jusqu'au tube diagonal en deux parties (4) de sorte qu'un second raccordement (14) au tube diagonal est agencé pour coïncider avec le premier raccordement (15) qui assemble les parties avant et arrière (4a, 4b) du tube diagonal.
